# FASCICULE DE BREVET EUROPEEN

(11) **EP 2 964 732 B1**
(45) Date de publication et mention de la délivrance du brevet: **09.01.2019**
(21) Numéro de dépôt: 14713211.2
(22) Date de dépôt: 04.03.2014
(51) Int. Cl.: C10G 65/02, B01J 37/20

(54) **PROCÉDÉ POUR LE DÉMARRAGE D'UNITES D'HYDROTRAITEMENT OU D'HYDROCONVERSION**
VERFAHREN ZUM STARTEN VON HYDROBEHANDLUNGSEINHEITEN ODER HYDROKONVERSIONEINHEITEN
METHOD FOR STARTING UP HYDROTREATING OR HYDROCONVERTING PROCESS UNITS

(30) Priorité: 06.03.2013 FR 1351993
(43) Date de publication de la demande: 13.01.2016
(73) Titulaire: EURECAT S.A., 07800 La Voulte-sur-Rhône (FR)
(72) Inventeur: DUFRESNE, Pierre, F-26000 Valence (FR)
(74) Mandataire: IFP Energies nouvelles
(86) Numéro de dépôt international: PCT/FR2014/050466
(87) Numéro de publication internationale: WO 2014/135780

(56) Documents cités:
- EP-A1- 0 122 180
- GB-A- 1 324 034
- US-A- 3 458 433

## Description

L'invention concerne les procédés d'hydrotraitement ou d'hydroconversion de charges pétrolières.
Ils permettent d'éliminer les hétéro-éléments soufre et azote ainsi que de modifier le squelette carboné des hydrocarbures.
Ces procédés mettent en oeuvre des réactions d'hydrotraitement (hydrodésulfuration, hydrodéazotation, hydrogénation de composés insaturés) et dans certains cas, des réactions d'hydroconversion (hydrocraquage, hydroisomérisation), lesquelles sont favorisées par des catalyseurs dont les phases actives contiennent des sulfures métalliques. Ces procédés sont mis en oeuvre dans des unités qui peuvent contenir un ou plusieurs réacteurs placés en série, chaque réacteur pouvant contenir un ou plusieurs lits catalytiques.

Les catalyseurs utilisés pour les réactions d'hydrotraitement et d'hydroconversion renferment un support (par exemple alumine, silice, silice-alumine, zéolite, alumine bore, seul ou en mélange), et au moins un élément hydro-déshydrogénant, tel qu'au moins un métal des groupes VI et/ou VIII non noble (par exemple molybdène, tungstène, cobalt, nickel). On utilise généralement un couple de deux de ces métaux, par exemple l'un des couples cobalt-molybdène, nickel-molybdène, nickel-tungstène.

Les réactions d'hydrotraitement sont généralement effectuées en présence d'hydrogène, entre 200 et 400°C, sous une pression comprise entre par exemple 5 et 200 bars, avec une vitesse spatiale (exprimée en litre de charge injectée par litre de catalyseur et par heure) comprise entre 0,2 et 8h-1. Ce sont par exemple des hydrotraitements de coupes naphta, kérosène ou gasoil, ou encore des hydrotraitements de distillats sous vide, en prétraitement de craquage catalytique ou d'hydrocraquage, ou des hydrotraitements de charges plus lourdes comme les résidus atmosphériques ou les résidus sous vide.

Les phases métalliques des catalyseurs neufs sont en général des oxydes à l'issue de leur préparation. Ce sont aussi des oxydes après régénération. Or, les métaux de ces catalyseurs ne sont actifs pour ces réactions que sous forme sulfurée. Il est donc nécessaire d'opérer une sulfuration et une activation du catalyseur préalablement à sa mise en oeuvre. La sulfuration peut être effectuée in-situ c'est-à-dire dans le réacteur de la réaction ou ex-situ, c'est-à-dire en-dehors du réacteur.

La sulfuration in-situ est effectuée sur le catalyseur chargé dans le réacteur en injectant un composé sulfuré en quantité suffisante pour permettre la transformation des oxydes métalliques du catalyseur en sulfures, Cet agent sulfuré est de type sulfure, disulfure, ou polysulfure, dans certains cas c'est directement de l'hydrogène sulfuré (H₂S). Le plus souvent du DMDS (diméthyldisulfure), du DMS (diméthylsulfure), ou du TBPS (tertiobutyl polysulfure), sont utilisés, additionnés à une charge. La quantité de soufre injecté est en général un peu supérieure à la stoechiométrie nécessaire à transformer les oxydes en sulfures, souvent de 5 à 15% poids de soufre par rapport au poids de catalyseur, selon la réaction suivante pour un catalyseur de type NiMo :

MoO₃ + H₂ + 2 H₂S → MoS₂ + 3 H₂O

NiO + H₂S → NiS + H₂O

La température finale de sulfuration est souvent assez voisine de la température réactionnelle (température choisie pour la réaction). Elle est généralement supérieure à 250°C, et souvent située autour de 300-350°C. La procédure de sulfuration en présence d'hydrogène peut durer de quelques heures à quelques jours, souvent de 12 à 36 heures.

Dans le cas le plus fréquent où le composé sulfuré est le DMDS, la procédure comprend en général deux grandes étapes : la première consiste à injecter le DMDS à température modérée, souvent comprise entre 200 et 250°C, puis à attendre que tout le réacteur ait été mis en contact avec ce composé. Ce point est vérifié en contrôlant la pression partielle d'hydrogène sulfuré (H₂S) en sortie de réacteur. Une fois que l'H₂S est détecté, la procédure se poursuit par une montée graduelle en température jusqu'à la température finale d'activation, voisine de 300-350°C. Arrivé à ce niveau, le catalyseur est considéré comme activé et l'étape d'hydrotraitement de la charge à traiter peut s'effectuer.

Les trois principaux agents sulfurants sont le DMDS, le TBPS, le DMS, le premier étant de loin le plus utilisé. Une des raisons principales de l'avantage du DMDS est sa relative facilité à se transformer en H₂S dans les conditions de démarrage sur un catalyseur non activé. Il est généralement admis qu'il est bien décomposé à 220°C. Le DMS présente l'inconvénient d'être plus stable et de nécessiter une température de 60 à 80°C supérieure. Ainsi le risque de réduction des espèces oxydes du catalyseur est plus élevé, risque que ne veulent pas prendre beaucoup d'opérateurs. Les polysulfures comme le TBPS présentent aussi l'avantage de décomposition facile comme le DMDS, voire même plus facile (à environ 20°C plus bas). Ils peuvent présenter certains autres inconvénients, en particulier une viscosité plus élevée.

Ainsi il est décrit dans l'art antérieur (US-4334982) la sulfuration au moyen d'un mélange d'hydrogène sulfuré généralement dilué dans de l'hydrogène (H₂S/H₂=0,5-5%vol.) effectuée de préférence par paliers de température (EP-B-64429).
Cet art antérieur (EP-64429) décrit également un procédé de sulfuration in-situ avec une charge liquide de sulfuration qui contient 5-20%pds de composés aromatiques, dépourvus de composés dioléfiniques et oléfiniques, et qui contient un composé sulfuré (DMDS).
Cette sulfuration in-situ permet de fixer dans le catalyseur généralement de 50 à 110% environ des quantités stoechiométriques de soufre calculées pour les quantités de sulfure de formule (selon les métaux présents), CoS, NiS, MoS₂, WS₂.

La sulfuration peut aussi s'effectuer sans ajout de composé sulfuré. Cette méthode s'appelle sulfuration à la charge. Dans les cas où une charge liquide de type gasoil de distillation directe est disponible, et que cette charge a une teneur en soufre importante, par exemple supérieure à 0,5% poids, et mieux 1% poids, il est possible de profiter de ce soufre pour sulfurer le catalyseur.
Néanmoins cette méthode est peu utilisée car elle présente plusieurs inconvénients. Le premier est qu'il est généralement admis que la performance du catalyseur ainsi sulfuré est plutôt inférieure à la méthode où un agent sulfuré est ajouté à la charge. La seconde est qu'elle nécessite un temps nettement plus important. En effet le soufre contenu dans une charge gasoil par exemple n'est que partiellement disponible pour se transformer en H₂S. Or, quelle que soit la méthode de sulfuration choisie, c'est bien l'H₂S qui est l'agent sulfurant qui va opérer la transformation des oxydes métalliques en sulfures. Dans le cas de la sulfuration dite à la charge, ce soufre est d'autant moins disponible que le catalyseur n'est pas actif pour le transformer puisqu'il est encore à l'état oxyde.
Le risque commun à toutes les méthodes de sulfuration est que le catalyseur soit en contact avec l'hydrogène, a fortiori sous haute pression, et en absence d'H₂S à des températures trop élevées, généralement estimées à 250°C en tout point du catalyseur. Avec cette méthode de sulfuration à la charge, ce risque est important, à cause de la difficulté à générer de l'H₂S; ainsi il faut monter très lentement la température pour éviter ce risque, ce qui fait que cette méthode est très longue.
On reviendra dans la suite du texte sur ce concept de « soufre disponible » potentiellement présent dans les charges pétrolières.

Le document GB-1324034 décrit une méthode de sulfuration avec une charge hydrocarbonée de démarrage sans composé sulfuré ajouté mais contenant du soufre et en présence d'hydrogène. L'unité comporte 2 réacteurs, le premier (dans le sens de l'écoulement de la charge) contient un catalyseur d'hydrotraitement ou d'hydrocraquage, et le second réacteur un catalyseur d'hydrofinition ou d'hydrocraquage, respectivement. Les 2 catalyseurs sont sous forme oxyde. Dans des conditions de température définies, le premier catalyseur se sulfure peu à peu et lorsque la sulfuration est complète, la phase gazeuse contenant H2S sulfure le second catalyseur.

La sulfuration in-situ avec addition d'agent sulfurant est largement pratiquée dans l'industrie aujourd'hui. Elle présente néanmoins quelques inconvénients.

Le premier, et le principal, est la nécessité en général de manipuler un composé sulfuré, comme le DMDS, ce qui présente un risque environnemental, en particulier une très forte odeur en cas de fuites, même très faibles, qui peut créer une alerte au niveau des riverains du site.
Parmi les autres inconvénients, on citera le temps nécessaire pour l'activation in-situ, une procédure bien menée demandant en général entre 12 et 24 heures, dans certains cas particuliers, plus longtemps. Un autre inconvénient est la relative difficulté technique du protocole qui nécessite un personnel spécialisé et formé, tant est critique pour la future bonne marche du réacteur le respect strict de toutes les phases de la procédure, afin obtenir un catalyseur très actif.

C'est la raison pour laquelle se sont développés des procédés de sulfuration où le catalyseur est sulfuré ex-situ, ou hors site, puis chargé dans le réacteur avec la teneur en soufre correspondant à la quantité stoechiométrique nécessaire pour les sulfures métalliques. Ces procédés se catégorisent en 2 grandes familles, les procédés de sulfuration simple, et les procédés de sulfuration et activation.

Dans la première catégorie, le catalyseur contient la bonne teneur en soufre correspondant aux sulfures CoS, NiS, MoS₂, WS₂. Ces procédés ont l'avantage d'apporter le soufre dont a besoin le catalyseur et suppriment ainsi la nécessité d'injection d'un composé sulfuré exogène. Cette sulfuration ex-situ peut être mise en oeuvre selon divers procédés. Ainsi le procédé Sulficat (US-4530917) comporte une première étape préliminaire réalisée en l'absence d'hydrogène, d'incorporation dans la porosité du catalyseur d'un compose sulfuré (tel qu'un polysulfure organique) en solution dans un solvant. Le catalyseur est chargé dans le réacteur. Dans une deuxième étape, réalisée "in situ", une activation du catalyseur est réalisée en présence d'hydrogène et à une température supérieure à 100 ou à 150°C, et généralement d'au plus 400°C. Il est ainsi introduit dans le catalyseur la quantité nécessaire de soufre et seulement la quantité requise de soufre. Le catalyseur est donc livré préconditionné à l'utilisateur et prêt pour être activé. La phase de démarrage de la réaction peut alors commencer. Par la suite, on a perfectionné le procédé décrit ci-dessus en additionnant au polysulfure organique du soufre élémentaire en quantité déterminée (US-5139983).

Le brevet US-5681787 décrit un autre procédé de sulfuration appartenant à cette première catégorie. Il comprend les étapes: (a) mise en contact du catalyseur avec du soufre élémentaire à une température telle que au moins une partie du soufre est incorporée dans les pores du catalyseur, puis (b) mise en contact avec une molécule hydrocarbonée oxygénée ayant au moins 12 atomes de carbone, le catalyseur obtenu présentant un auto-échauffement réduit par comparaison avec des catalyseurs n'ayant pas subi l'étape (b).

La deuxième famille de procédés ex-situ concerne les procédés de présulfuration et d'activation.
Dans le procédé Totsucat de la demanderesse, le catalyseur n'est pas simplement présulfuré, il est également préactivé, donc chargé dans le réacteur à l'état actif et prêt à l'emploi. Ce procédé a fait l'objet de plusieurs brevets.
Dans le procédé décrit dans EP-785022, on incorpore ex-situ du soufre dans la porosité du catalyseur qui est sous la forme d'un lit catalytique en mouvement, en présence d'hydrogène, et en présence soit d'hydrogène sulfuré, soit d'un composé sulfuré capable de se décomposer, en présence d'hydrogène, en hydrogène sulfuré.
La température est située entre 80 et 450°C, de préférence entre 110 et 400°C. Le lit catalytique en mouvement est par exemple un lit mobile, un lit circulant, un lit fluidisé, un lit expansé, un lit bouillonnant, ou un lit de type à bandes ou rotatif.

A l'issue du procédé Totsucat, il est obtenu un catalyseur présulfuré contenant au moins 50% du soufre, et au plus 110% du soufre, correspondant à la quantité stoechiométrique des sulfures des métaux déposés à la surface du catalyseur. Ce catalyseur contient toute la quantité nécessaire de soufre pour la réaction envisagée et seulement cette quantité ; il n'y a pas de composés soufrés libres. En effet, grâce à l'étape de traitement en présence d'hydrogène, ce soufre est présent à l'état de sulfure métallique.
Ce catalyseur est conditionné, livré à l'utilisateur et chargé dans le réacteur.

Le brevet US-5958816 (Tricat) décrit également un procédé pour préparer un catalyseur présulfuré/activé, procédé réalisé avec un catalyseur en mouvement dans un lit bouillonnant ou expansé et sulfuré/activé sous mélange H₂S/H₂.

Un avantage déterminant de cette sulfuration ex-situ est que le catalyseur chargé dans le réacteur contient déjà la quantité de soufre nécessaire et qu'il est déjà activé, donc déjà prêt à être utilisé comme catalyseur actif. Cette particularité fait gagner un temps précieux à l'utilisateur et simplifie considérablement la procédure de démarrage. L'utilisateur n'a qu'à démarrer la réaction par injection de la charge à traiter.

L'art antérieur se résume donc à trois techniques de sulfuration activation des catalyseurs d'hydrotraitement/hydroconversion :
1- la sulfuration in-situ à la charge d'un catalyseur chargé oxyde dans le réacteur.
2- la sulfuration in-situ, avec une charge additionnée d'agent sulfurant, d'un catalyseur chargé oxyde dans le réacteur.
3- la sulfuration ex-situ, avec les deux familles : présulfuré simplement, et présulfuré/préactivé. Le catalyseur simplement présulfuré ex-situ est chargé tel quel et subit une activation finale in-situ en présence d'hydrogène. Le catalyseur présulfuré/préactivé est chargé tel quel et est directement prêt à l'emploi.

Chaque technique présente des avantages, mais aussi des inconvénients auxquels la présente invention entend nettement remédier:
1- la sulfuration in-situ à la charge est économique, mais très longue et de performance parfois douteuse,
2- la sulfuration in-situ avec une charge additionnée d'agent sulfurant donne de bons résultats, mais pose le problème de la manipulation de produits malodorants et toxiques,
3- la sulfuration ex-situ sans activation présente l'inconvénient de devoir encore réaliser une activation in-situ. La sulfuration ex-situ avec activation est parfaite en termes de facilité et de rapidité de démarrage, mais présente l'inconvénient assez fatal de coût plus élevé, comparé à la sulfuration in-situ, en particulier pour des grosses unités contenant des quantités importantes de catalyseurs, des unités par exemple à plus de 100 m³ de catalyseur. Les sulfurations hors-site peuvent aussi présenter l'inconvénient de devoir charger un catalyseur qui peut avoir une certaine sensibilité à l'air, ce qui peut compliquer notablement la procédure de chargement.

### Description de l'invention

La demanderesse a constaté qu'il était possible de réunir ces trois méthodes en une seule, qui, de manière inattendue, supprime ou du moins atténue les inconvénients de chacune de ces trois méthodes et en conserve substantiellement les avantages.

Selon l'invention, on utilise la sulfuration à la charge, comme la méthode 1, sans ajout d'agent sulfurant, contrairement à la méthode 2.
Plus précisément elle consiste à charger dans l'unité à la fois du catalyseur présulfuré-préactivé, comme en méthode 3, et du catalyseur oxyde, comme la méthode 2.

L'invention concerne précisément un procédé de démarrage d'une unité d'hydrotraitement ou d'hydroconversion réalisé en présence d'hydrogène, dans au moins 2 lits catalytiques, dans lequel
- au moins un lit contient au moins un catalyseur présulfuré et préactivé et au moins un lit catalytique contient un catalyseur dont les métaux catalytiques sont sous forme oxydée
- une charge dite de démarrage, qui est une coupe hydrocarbonée contenant au moins 0.3%pds de soufre, dépourvue de composés oléfiniques et ne contenant pas de composé sulfuré ajouté, traverse un premier lit catalytique contenant ledit catalyseur présulfuré et préactivé puis traverse au moins un lit catalytique contenant un catalyseur dont les métaux catalytiques sont sous forme oxydée,
- et le premier lit de catalyseur présulfuré et préactivé atteint une température d'au moins 220°C.

Avantageusement, le lit contenant le catalyseur dont les métaux sont sous forme oxydée est maintenu à une température de 210-250°C qui est inférieure de 10-30°C à celle du premier lit.

De façon avantageuse, la charge traverse tous les lits catalytiques contenant ledit catalyseur présulfuré et préactivé puis traverse tous les lits catalytiques contenant du catalyseur dont les métaux catalytiques sont sous forme oxydée.
De façon préférée, ladite charge circule en écoulement descendant.

Une condition nécessaire de l'invention est donc que le catalyseur présulfuré-préactivé soit chargé en tête des lits catalytiques traversés. Le catalyseur oxyde est alors chargé dans au moins un lit suivant.
De façon préférée, les lits catalytiques sont chargés dans le même réacteur, le catalyseur présulfuré et préactivé étant chargé dans le(s) lit(s) en tête de réacteur et la charge de démarrage circulant en écoulement descendant. Le catalyseur oxyde est alors chargé dans le(s) lits en queue de réacteur.

Un schéma typique est que le catalyseur présuifuré-préactivé soit chargé dans le lit supérieur d'un réacteur comportant 2 lits catalytiques et que le catalyseur oxyde soit chargé dans le lit inférieur du même réacteur.

Dans le cas d'une unité à 2 réacteurs disposés en série, en général, le 1er réacteur est en partie au moins chargé avec un catalyseur sulfuré activé ex-situ et le second est chargé avec le catalyseur oxyde.

Un avantage de l'invention, et en particulier des modes de chargement préférés, est aussi que, comme le chargement du catalyseur dans le lit inférieur est un peu plus compliqué pour un catalyseur présulfuré sensible à l'air, la procédure se simplifie puisque le catalyseur présulfuré/préactivé n'est chargé que dans le lit supérieur.

Ainsi, l'invention concerne plus précisément un procédé de démarrage d'unité d'hydrotraitement consistant à charger la partie supérieure des lits catalytiques avec un catalyseur sulfuré activé ex-situ et la partie inférieure avec un catalyseur oxyde (terme abrégé pour le catalyseur dont les métaux sous forme oxydée).

Le principe de l'invention est que le catalyseur présulfuré/préactivé placé dans le premier lit (en tête) puisse transformer les molécules sulfurées dites faciles à transformer en sulfure d'hydrogène, à température modérée, et que cet H₂S puisse à son tour sulfurer le catalyseur oxyde.

Ces molécules dites faciles à transformer -des sulfures, mercaptans, thiophéniques légers - restent plus difficiles à transformer que les agents sulfurants classiques que sont le TBPS (tertiobutyl polysulfure), le DMDS ou le DMS. Néanmoins, et c'est la surprise de l'invention, le caractère activé du catalyseur de tête permet de transformer toute une série de molécules sulfurées en H₂S dans des conditions relativement douces, c'est-à-dire à température modérée.

Une condition de bon fonctionnement est que la charge liquide de sulfuration contienne une quantité de soufre appréciable, et soit dépourvue de composés oléfiniques.

La charge à traiter circule en général en écoulement descendant. Elle passe en premier lieu sur au moins un lit catalytique contenant au moins un catalyseur présulfuré et préactivé puis passe sur au moins un lit catalytique contenant au moins un catalyseur sous forme oxydée. De préférence, la charge traverse tous les lits catalytiques contenant ledit catalyseur présulfuré et préactivé puis traverse tous les lits catalytiques contenant du catalyseur dont les métaux catalytiques sont sous forme oxydée.

Le catalyseur présulfuré et préactivé contient de 50 à 110% du soufre correspondant à la quantité stoechiométrique des sulfures métalliques, et de préférence de 80 à 110%. Il ne comporte pas de composé sulfuré libre. Il a été activé ex-situ par au moins un traitement sous hydrogène. C'est par exemple un catalyseur préparé selon le procédé Totsucat décrit précédemment.

La composition du catalyseur, qu'il soit sous forme oxyde ou présulfuré/préactivé est classique et correspond aux catalyseurs décrits dans l'art antérieur, et présentés précédemment.
Le catalyseur sous forme oxydée et/ou le catalyseur présulfuré-activé contient des métaux des groupes VIII et VIB, en particulier Co, Ni, Mo, W. Généralement il contient un support alumine, silice, silice-alumine, zéolite, alumine-bore, seul ou en mélange.
Ce sont pour l'essentiel des catalyseurs CoMo ou NiMo ou NiW.
Ce peuvent être aussi des catalyseurs massiques non supportés contenant donc des quantités importantes de métaux des groupes VI et VIII, par exemple de type Ni, Mo, W.

Ces catalyseurs sous forme présulfurée-préactivée ou sous forme oxydée sont des catalyseurs neufs ou des catalyseurs régénérés.

Le ratio entre d'une part le poids de catalyseur présulfuré/préactivé et d'autre part le poids de catalyseur dont les métaux catalytiques sont sous forme oxydée est de 0.25 à 4, et de préférence de 0.5 à 2.

Le chargement des lits catalytiques dans le réacteur peut avantageusement être réalisé par chargement du ou des lits inférieurs avec du catalyseur dont les métaux catalytiques sont sous forme oxyde, chargement ayant lieu sous air, puis par chargement du ou des lits au-dessus avec du catalyseur présulfuré-préactivé, ce chargement pouvant avoir lieu sous azote, si le catalyseur ne reçoit aucun traitement de passivation suffisant pour autoriser un chargement sous air.
Après chargement des catalyseurs dans les lits catalytiques correspondants, le procédé de démarrage est mis en oeuvre avec une charge dite de démarrage jusqu'à sulfuration complète du catalyseur contenant les métaux sous forme oxydée. Après activation, l'alimentation de la charge de démarrage est alors stoppée et la charge à traiter est introduite.

Ce procédé de démarrage peut concerner tous les types d'hydrotraitement et d'hydroconversion. Néanmoins ses avantages sont réduits avec des charges peu chargées en soufre comme les naphtas, voire des kérosènes. Il prend réellement tout son sens pour les unités d'hydrotraitement de distillats de type gasoil. Il peut s'appliquer également pour des charges plus lourdes que les gasoils, comme les gasoils sous vide (ou Vacuum Gas Oils).
Le procédé de démarrage est réalisé avec une charge liquide dite de démarrage circulant en général en écoulement descendant. L'écoulement descendant est le type d'écoulement préféré dans les procédés d'hydrotraitement et d'hydroconversion, comme étant le plus facile à mettre en oeuvre à grande échelle pour les procédé en lit fixe, comparé à un écoulement montant.
De préférence, un contrôle des températures est exercé. De façon préférée, il est réalisé en injectant un gaz de quench entre le (ou les) lit(s) catalytique(s) contenant ledit catalyseur présulfuré et préactivé et le (ou les) lit(s) catalytique(s) contenant ledit catalyseur dont les métaux sont sous forme oxydée.
Le procédé est réalisé avantageusement dans des réacteurs multi-lits séparés par des quenchs gazeux.
Ceci permet ainsi un certain contrôle séparé de la température de chaque lit, et en particulier à ce que la température du (ou des) lit(s) d'oxyde puisse être gardé à une température légèrement inférieure de quelques degrés ou dizaines de degrés à celle du (ou des) lit(s) de catalyseur présulfuré/préactivé, dit premier lit.

Le procédé opère selon les étapes suivantes après chargement des lits catalytiques, et les étapes classiques, comme la purge de l'air par l'azote, l'introduction d'hydrogène et la pressurisation de l'unité:
a) après un éventuel séchage, en présence d'une charge de démarrage ne contenant pas de composé sulfuré ajouté, en présence d'hydrogène, la température du premier lit contenant le catalyseur présulfuré et préactivé est portée à 220-280°C, ou 220-274°C, de préférence 230-270°C, la température du lit contenant le catalyseur dont les métaux sont sous forme oxydée est portée à 210-250°C, de préférence 220-250°C, et est inférieure de 10-30°C à celle dudit premier lit,
b) en présence d'hydrogène sulfuré en sortie dudit lit de catalyseur dont les métaux sont sous forme oxydée, la température dudit lit contenant le catalyseur oxyde est portée puis maintenue à 320-350°C.

Plus précisément:
a) La température des lits est augmentée progressivement en présence d'une circulation d'hydrogène. Un temps de séchage, de préférence vers 120-130°C, peut être observé pour permettre au catalyseur de type oxyde d'évacuer de l'eau.
   La température du lit (premier lit) de catalyseur présulfuré préactivé est progressivement portée à 220-280°C, ou 220-270°C, de préférence 230-270°C, en moyenne par exemple autour de 250°C, et gardée en plateau à ce niveau, pour permettre à l'hydrogène sulfuré d'être généré.
   Le lit (2^{e} lit) contenant le catalyseur oxyde est maintenu à une température légèrement inférieure de 10-30°C à celle du premier lit, à savoir à 210-250°C, de préférence à 220-250°C, et en moyenne par exemple 230°C, pour permettre à l'hydrogène sulfuré généré dans le 1^{er} lit de diffuser dans le 2^{ème} lit.
   La température du lit contenant le catalyseur oxyde doit être telle que ce catalyseur ne soit pas endommagé sous pression d'hydrogène et en l'absence d'H₂S. En effet une certaine réduction de la phase MoO₃ en MoO₂ peut se produire en l'absence d'H₂S, qui viendrait perturber ensuite la formation de la bonne phase active sulfurée.
b) lorsque la pression partielle d'hydrogène sulfuré commence à monter en sortie du ou des lits contenant le catalyseur oxyde, on peut passer à la phase suivante du démarrage qui consiste à finaliser l'activation du catalyseur oxyde. L'hydrogène sulfuré produit va sulfurer le catalyseur dont les métaux sont sous forme oxydée. La température est portée à 320-350°C, de façon progressive en maintenant un contrôle de la pression partielle d'H₂S. Il est essentiel que la production d'H₂S du ou des lits de catalyseur activé compense toujours la consommation du ou des derniers lits de catalyseur oxyde.
   Le plateau final à cette température dure au minimum environ 4 heures et souvent 6 à 8 heures. Il est possible, mais pas réellement utile, d'effectuer ce plateau plus longtemps, l'activation étant terminée à ce niveau.

La génération d'H₂S dans le premier lit catalytique s'effectue via des réactions d'hydrodésulfuration lorsque la température du lit catalytique contenant le catalyseur présulfuré et préactivé atteint généralement 220°C.
Cette génération est rendue possible du fait que le catalyseur présulfuré opère une hydrodésulfuration de la charge de démarrage qui contient un type de soufre pouvant être facilement enlevé par hydrodésulfuration à température modérée, inférieure à la température qui serait nécessaire pour avoir une hydrodésulfuration totale, à savoir une élimination de tous les types de composés sulfurés, y compris les plus réfractaires.

Le choix de la charge de démarrage se porte donc sur des charges contenant des teneurs en soufre importante et du soufre facile à éliminer. Ce sont par exemple des gasoils atmosphériques. Ce sont des coupes dont le point d'ébullition initial est généralement compris entre 210°C et 250°C, le plus souvent entre 230 et 250°C, et le point d'ébullition final généralement de 350 à 380°C. Les composés sulfurés pour lesquels le soufre est facilement éliminable sont les mercaptans et les sulfures, ainsi que les thiophéniques légers.
Ladite charge contient au moins 0.3%, et de préférence au moins 0.5% pds de soufre, de façon encore plus préférée au moins 0,7%pds de soufre, et de manière avantageuse au moins 0,9% poids de soufre, et ne contient pas de composé sulfuré ajouté. C'est une charge classiquement utilisée pour cet usage. Habituellement, c'est un gasoil Straight-Run issu de la distillation atmosphérique du brut. Elle ne contient pas de composés oléfiniques (oléfines, dioléfines...). Donc elle ne sera pas issue de procédés de craquage tels que la cokéfaction, la viscoréduction, le craquage catalytique et le vapocraquage. Elle contient des mercaptans et/ou des sulfures et/ou des thiophéniques légers.
Ainsi, la charge de démarrage est de préférence un gasoil Straight-Run issu de la distillation atmosphérique du brut.

Avantageusement, un contrôle de la pression partielle d'hydrogène sulfuré en sortie du dernier lit catalytique contenant le catalyseur sous forme oxydée, ou en sortie du réacteur lorsqu'il est unique, permet de piloter la montée en température jusqu'au palier de sulfuration. Ainsi l'étape b) est avantageusement réalisée lorsque la pression partielle d'hydrogène sulfuré en sortie du dernier lit catalytique est supérieure à 0,2% volume, et de préférence à 0,5% volume.

Lorsque la sulfuration est achevée, ainsi que l'activation, la charge de démarrage est stoppée et la charge à traiter est introduite dans les conditions de la réaction à effectuer. Dans certains cas, la charge à traiter peut servir de charge de démarrage si elle répond aux critères indiqués qui sont de contenir suffisamment de soufre et d'être dépourvus d'oléfines.

En opérant le procédé de démarrage selon l'invention, on a pu constater les avantages suivants:
- limitation de l'effet "pop corn" ; cet effet est dû à une condensation d'eau dans le fond du lit catalytique et à un échauffement rapide en présence d'une charge liquide, ce qui provoque un séchage trop rapide endommageant le catalyseur
- qualité de formation de la phase active sulfurée du catalyseur sous forme oxydée, en particulier dû à l'absence de formation de la phase MoO₂ qui peut se produire en présence de H2 et en l'absence de H2S ; cette phase formée par réduction de MoO₃ contrecarre le processus de sulfuration
- limitation du cokage du catalyseur sous forme oxydée; en effet sous l'influence d'une charge trop réactive (présence d'oléfines) ou trop lourde, ou d'une température trop élevée, ou d'une pression partielle d'hydrogène trop basse, le catalyseur sous forme oxydée a tendance à se coker.

La pression des procédés selon l'invention est de 5 à 300 bars, exprimé en pression totale de l'unité, et plus généralement comprise entre 20 et 200 bars.

### Exemples

### Exemple 1 (comparatif-sulfuration à la charge)

Un catalyseur commercial de type CoMo/alumine référence KF757 d'Albemarle est pris comme référence. Un volume de 10ml est chargé dans un réacteur d'une unité de test catalytique. Ce premier exemple vise à illustrer un démarrage effectué avec une charge gasoil non additivée.

La charge utilisée est un gasoil Straight Run de densité 0,839 g/ml, de teneur en soufre 1,20%pds, de teneur en azote 0,0102%pds, de teneur en aromatiques 28,3%pds, de points d'ébullition à 5% distillé de 211 °C et à 95% distillé de 366°C.

Le réacteur est pressurisé à 40 bars. La charge est injectée dans le réacteur à un débit de 20ml/h (vitesse volumique horaire de 2), et la température portée à 250°C en 8h. Le ratio H2/HC est de 300 (exprimé en litres gazeux par litres liquides). Un plateau de 4h est respecté à cette température. Ensuite la température est portée à 320°C en 4h. A ce stade, l'activation du catalyseur est considérée comme terminée.

Le test d'HDS en lui-même peut démarrer. La température est portée à 340°C pendant 40h, puis 345°C pendant 30h, puis 350°C pendant 30h. A chaque palier, 3 échantillons d'effluent sont prélevés et analysés pour leur teneur en soufre. Les teneurs en soufre moyennes à chaque température sont respectivement de 63 ppm, 31 ppm et 13 ppm.

### Exemple 2 (comparatif-sulfuration à la charge additivée)

La même expérimentation est répétée strictement, si ce n'est que la charge gasoil est additivée avec du diméthyldisulfure (DMDS) à hauteur de 3% poids, ce qui correspond à 2,04%pds de soufre. Cette charge est injectée jusqu'à la température de 320°C. Elle est ensuite remplacée par le gasoil non additivé pour le test.

### Exemple 3 (comparatif-catalyseur présulfuré-préactivé)

Le même catalyseur que celui de l'exemple 1, CoMo KF757, est présulfuré selon le procédé Totsucat. Une quantité de 100ml a subi un traitement sous gaz mélange H₂/H₂S à une température finale de 280°C. Les teneurs obtenues en soufre et carbone sont de 12,4% et de 6,2%pds. Un volume de 10ml est chargé dans l'unité de test, et le protocole ensuite est similaire à celui de l'exemple 1, avec la même charge gasoil.

Le gasoil utilisé à l'exemple 1 est injecté. La température portée à 250°C en 8h, puis sans palier (inutile pour un catalyseur présulfuré préactivé) à 320°C en 4h. Le test est ensuite conduit avec le même protocole qu'à l'exemple 1.

### Exemple 4 (invention-chargement mixte catalyseur oxyde / catalyseur présulfuré-préactivé)

Le catalyseur KF757 de référence est utilisé à la fois sous forme oxyde et présulfuré/ préactivé. 5ml d'oxyde sont chargés en fond de réacteur et 5ml de catalyseur présulfuré (celui de l'exemple 3) en haut. Ensuite le même protocole qu'à l'exemple 1 est utilisé (40b, H2/HC=300, WH=2, charge non additivée de DMDS).

La température est portée à 250°C en 8h, laissée 4h, puis portée à 320°C en 4h.

Le test d'HDS s'effectue dans les mêmes conditions aux 3 températures de 340°C, 345°C et 350°C.

### Résultats

Les résultats sont portés dans le tableau ci-dessous. On y indique les teneurs en soufre des effluents aux 3 températures, ainsi que le calcul de l'activité HDS, en prenant comme référence 100 la sulfuration in-situ avec la charge additivée.

La sulfuration à la charge selon l'exemple 1 montre une activité inférieure au cas de l'exemple 2 de référence avec charge additivée de DMDS.L'exemple 4 selon l'invention montre une activité équivalente (compte tenu de l'incertitude de la mesure) à celle de la sulfuration classique d'un catalyseur oxyde par une charge additivée.

| Exemple | | Démarrage | [S1] ppm | [S2] ppm | [S3] ppm | HDS (%) |
|---|---|---|---|---|---|---|
| 1 | Catalyseur oxyde | GO | 63 | 31 | 13 | 89 |
| 2 | Catalyseur oxyde | GO + DMDS | 43 | 20 | 9 | 100 |
| 3 | catalyseur présulfuré-préactivé | GO | 49 | 24 | 10 | 96 |
| 4 | chargement mixte catalyseurs oxyde / présulfuré-préactivé | GO | 46 | 21 | 10 | 98 |

## Revendications

1. Procédé de démarrage d'une réaction d'hydrotraitement ou d'hydroconversion réalisé en présence d'hydrogène, dans au moins 2 lits catalytiques, **caractérisé en ce que**
- au moins un lit contient au moins un catalyseur présulfuré et préactivé et au moins un lit catalytique contient un catalyseur dont les métaux catalytiques sont sous forme oxydée
- une charge dite de démarrage, qui est une coupe hydrocarbonée contenant au moins 0.3%pds de soufre, dépourvue de composés oléfiniques et ne contenant pas de composé sulfuré ajouté, traverse un premier lit catalytique contenant ledit catalyseur présulfuré et préactivé puis traverse au moins un lit catalytique contenant un catalyseur dont les métaux catalytiques sont sous forme oxydée,
- et le premier lit de catalyseur présulfuré et préactivé atteint une température d'au moins 220°C.

2. Procédé selon la revendication 1 dans lequel la charge traverse tous les lits catalytiques contenant ledit catalyseur présulfuré et préactivé puis traverse tous les lits catalytiques contenant du catalyseur dont les métaux catalytiques sont sous forme oxydée.

3. Procédé selon l'une des revendications précédentes dans lequel ladite charge circule en écoulement descendant.

4. Procédé selon l'une des revendications précédentes dans lequel les lits catalytiques sont chargés dans le même réacteur, le catalyseur présulfuré et préactivé étant chargé dans le(s) lit(s) en tête de réacteur et la charge de démarrage circulant en écoulement descendant.

5. Procédé selon l'une des revendications précédentes dans lequel ledit catalyseur présulfuré et préactivé contient de 80 à 110% du soufre correspondant à la quantité stoechiométrique des sulfures métalliques, ne comporte pas de composé sulfuré libre et a été activé ex-situ par au moins un traitement sous hydrogène.

6. Procédé selon l'une des revendications précédentes dans lequel le catalyseur sous forme oxydée et/ou le catalyseur présulfuré-activé contient des métaux des groupes VIII et VIB, en particulier Co, Ni, Mo, W , contient un support alumine, silice, silice-alumine, zéolite, alumine-bore, seul ou en mélange.

7. Procédé selon l'une des revendications précédentes dans lequel la charge de démarrage est un gasoil Straight-Run issu de la distillation atmosphérique du brut.

8. Procédé selon l'une des revendications précédentes opérant selon les étapes suivantes après chargement des lits catalytiques :
a) après un éventuel séchage, en présence d'une charge de démarrage ne contenant pas de composé sulfuré ajouté , en présence d'hydrogène, la température du premier lit contenant le catalyseur présulfuré et préactivé est portée à 220-280°C, de préférence 230-270°C, la température du lit contenant le catalyseur dont les métaux sont sous forme oxydée est portée à 210-250°C, de préférence 220-250°C, et est inférieure de 10-30°C à celle dudit premier lit,
b) en présence d'hydrogène sulfuré en sortie dudit lit de catalyseur dont les métaux sont sous forme oxydée, la température dudit lit contenant le catalyseur oxyde est amenée et maintenue à 320-350°C.

9. Procédé selon les revendications précédentes dans lequel un gaz de quench est injecté entre le (ou les) lit(s) catalytique(s) contenant ledit catalyseur présulfuré et préactivé et le (ou les) lit(s) catalytique(s) contenant ledit catalyseur dont les métaux sont sous forme oxydée.

10. Procédé selon la revendication 8 dans lequel l'étape b) est réalisée lorsque la pression partielle d'hydrogène sulfuré en sortie du dernier lit catalytique est supérieure à 0.2% volume, et de préférence 0.5% volume .

11. Procédé selon l'une des revendications précédentes dans lequel le ratio entre d'une part le poids de catalyseur présulfuré/préactivé et d'autre part le poids de catalyseur dont les métaux catalytiques sont sous forme oxydée est de 0.25 à 4, et de préférence de 0.5 à 2.

12. Procédé selon l'une des revendications précédentes dans lequel la charge de démarrage contient de préférence au moins 0.5%pds de soufre.

## Patentansprüche

1. Verfahren zum Starten einer Hydrobehandlungs- oder Hydroumwandlungsreaktion, die in Anwesenheit von Wasserstoff durchgeführt wird, in mindestens 2 Katalysatorbetten, **dadurch gekennzeichnet, dass**
- mindestens ein Bett mindestens einen vorgeschwefelten und voraktivierten Katalysator enthält, und mindestens ein Katalysatorbett einen Katalysator enthält, dessen Katalysatormetalle in oxidierter Form sind,
- eine als Startcharge bezeichnete Charge, die ein Kohlenwasserstoffschnitt ist, der mindestens 0,3 Gew.-% Schwefel enthält, ohne Olefinverbindungen und keine zugesetzten Schwefelverbindungen enthält, ein erstes Katalysatorbett durchquert, das den vorgeschwefelten und voraktivierten Katalysator enthält, dann mindestens ein Katalysatorbett durchquert, das einen Katalysator enthält, dessen Katalysatormetalle in oxidierter Form sind,
- und das erste Bett des vorgeschwefelten und voraktivierten Katalysators eine Temperatur von mindestens 220 °C erreicht.

2. Verfahren nach Anspruch 1, wobei die Charge alle Katalysatorbetten durchquert, die den vorgeschwefelten und voraktivierten Katalysator enthalten, dann alle Katalysatorbetten durchquert, die den Katalysator enthalten, dessen Katalysatormetalle in oxidierter Form sind.

3. Verfahren nach einem der vorhergehenden Ansprüche, wobei die Charge im absteigenden Strom zirkuliert.

4. Verfahren nach einem der vorhergehenden Ansprüche, wobei die Katalysatorbetten in denselben Reaktor geladen werden, wobei der vorgeschwefelte und voraktivierte Katalysator in das (die) Bett(en) am Kopf des Reaktors geladen wird, und die Startcharge im absteigenden Strom zirkuliert.

5. Verfahren nach einem der vorhergehenden Ansprüche, wobei der vorgeschwefelte und voraktivierte Katalysator von 60 bis 110 % Schwefel entsprechend der stöchiometrischen Menge von Metallsulfiden enthält, keine freie Schwefelverbindung umfasst und ex situ durch mindestens eine Behandlung unter Wasserstoff aktivert wurde.

6. Verfahren nach einem der vorhergehenden Ansprüche, wobei der Katalysator in oxidierter Form und/oder der vorgeschwefelte-aktivierte Katalysator Metalle der Gruppen VIII und VIB enthalten, insbesondere Co, Ni, Mo, W, einen Aluminiumträger enthält, Silicium, Silicium-Aluminium, Zeolith, Aluminium-Bor, allein oder in Mischung.

7. Verfahren nach einem der vorhergehenden Ansprüche, wobei die Startcharge ein Straight-Run-Gasöl aus der atmosphärischen Destillation des Rohstoffs ist.

8. Verfahren nach einem der vorhergehenden Ansprüche, wobei nach dem Laden der Katalysatorbetten gemäß den folgenden Schritten vorgegangen wird:
a) nach einer optionalen Trocknung, in Anwesenheit einer Startcharge, die keine zugesetzte Schwefelverbindung enthält, in Anwesenheit von Wasserstoff, wird die Temperatur des ersten Betts, das den vorgeschwefelten und voraktivierten Katalysator enthält, auf 220 bis 280 °C, vorzugsweise 230 bis 270 °C, gebracht wird, wobei die Temperatur des Betts, das den Katalysator enthält, dessen Metalle in oxidierter Form sind, auf 210 bis 250 °C gebracht wird, vorzugsweise 220 bis 250 °C, und um 10 bis 30 °C niedriger ist als jene des ersten Betts,
b) in Anwesenheit von Schwefelwasserstoff am Ausgang des Betts des Katalysators, dessen Metalle in oxidierter Form sind, wird die Temperatur des Betts, das den Oxidkatalysator enthält, auf 320 bis 350 °C gebracht und gehalten.

9. Verfahren nach einem der vorhergehenden Ansprüche, wobei ein Quenchgas zwischen dem (oder den) Katalysatorbett(en), enthaltend den vorgeschwefelten und voraktivierten Katalysator, und dem (oder den) Katalysatorbett(en), enthaltend den Katalysator, dessen Metalle in oxidierter Form sind, injiziert wird.

10. Verfahren nach Anspruch 8, wobei der Schritt b) durchgeführt wird, wenn der Schwefelwasserstoff-Partialdruck am Ausgang des letzten Katalysatorbetts größer ist als 0,2 Vol.-% und vorzugsweise 0,5 Vol.-%.

11. Verfahren nach einem der vorhergehenden Ansprüche, wobei das Verhältnis zwischen einerseits dem Gewicht des vorgeschwefelten/voraktivierten Katalysators und andererseits dem Gewicht des Katalysators, dessen Katalysatormetalle in oxidierter Form sind, von 0,25 bis 4 und vorzugsweise von 0,5 bis 2 beträgt.

12. Verfahren nach einem der vorhergehenden Ansprüche, wobei die Startcharge vorzugsweise mindestens 0,5 Gew.-% Schwefel enthält.

## Claims

1. Process for start-up of a hydrotreatment or hydroconversion reaction carried out in the presence of hydrogen, in at least 2 catalytic beds, **characterized in that**
- at least one bed contains at least one presulfurized and preactivated catalyst, and at least one catalytic bed contains a catalyst whose catalytic metals are in oxidized form,
- a so-called starting feedstock, which is a hydrocarbon fraction that contains at least 0.3% by weight of sulfur, lacking olefinic compounds and not containing an added sulfur-containing compound, passes through a first catalytic bed that contains said presulfurized and preactivated catalyst and then passes through at least one catalytic bed that contains a catalyst whose catalytic metals are in oxidized form,
- and the first presulfurized and preactivated catalyst bed reaches a temperature of at least 220°C.

2. Process according to Claim 1, wherein the feedstock passes through all of the catalytic beds containing said presulfurized and preactivated catalyst and then passes through all of the catalytic beds containing the catalyst whose catalytic metals are in oxidized form.

3. Process according to one of the preceding claims, wherein said feedstock circulates in downward flow.

4. Process according to one of the preceding claims, wherein the catalytic beds are loaded into the same reactor, with the presulfurized and preactivated catalyst being loaded into the bed(s) at the top of the reactor and the starting feedstock circulating in downward flow.

5. Process according to one of the preceding claims, wherein said presulfurized and preactivated catalyst contains 80 to 110% of sulfur corresponding to the stoichiometric amount of metal sulfides, does not comprise free sulfur-containing compound, and has been activated ex-situ by at least one treatment in hydrogen.

6. Process according to one of the preceding claims, wherein the catalyst in oxidized form and/or the presulfurized-activated catalyst contains metals of groups VIII and VIB, in particular Co, Ni, Mo, and W, and contains a substrate of alumina, silica, silica-alumina, zeolite, or alumina-boron, by itself or in a mixture.

7. Process according to one of the preceding claims, wherein the starting feedstock is a straight-run diesel fuel that is obtained from atmospheric distillation of crude.

8. Process according to one of the preceding claims that operates according to the following stages after the catalytic beds are loaded:
a) after an optional drying, in the presence of a starting feedstock that does not contain an added sulfur-containing compound, in the presence of hydrogen, the temperature of the first bed that contains the presulfurized and preactivated catalyst is brought to 220-280°C, preferably 230-270°C; the temperature of the bed containing the catalyst whose metals are in oxidized form is brought to 210-250°C, preferably 220-250°C, and is lower by 10-30°C than that of said first bed,
b) in the presence of hydrogen sulfide at the outlet of said catalyst bed whose metals are in oxidized form, the temperature of said bed that contains the oxide catalyst is brought to 320-350°C and then held there.

9. Process according to the preceding claims, in which a quench gas is injected between the catalytic bed(s) containing said presulfurized and preactivated catalyst and the catalytic bed(s) containing said catalyst whose metals are in oxidized form.

10. Process according to Claim 8, wherein stage b) is carried out when the partial pressure of hydrogen sulfide at the outlet of the last catalytic bed is higher than 0.2% by volume, and preferably 0.5% by volume.

11. Process according to one of the preceding claims, wherein the ratio between, on the one hand, the weight of presulfurized/preactivated catalyst and, on the other hand, the catalyst weight whose catalytic metals are in oxidized form, is 0.25 to 4, and preferably 0.5 to 2.

12. Process according to one of the preceding claims, wherein the starting feedstock preferably contains at least 0.5% by weight of sulfur.
